# EUROPÄISCHE PATENTSCHRIFT

(11) **EP 0 422 356 B1**
(45) Veröffentlichungstag und Bekanntmachung des Hinweises auf die Patenterteilung: **21.07.1993**
(21) Anmeldenummer: 90115351.0
(22) Anmeldetag: 10.08.1990
(51) Int. Cl.: F01N 7/14, F01N 7/08, F16L 59/18

(54) **Doppelwandiges Rohr**
Double-walled pipe
Tuyau à double paroi

(30) Priorität: 12.10.1989 DE 8912161 U
(43) Veröffentlichungstag der Anmeldung: 17.04.1991
(73) Patentinhaber: ZEUNA-STÄRKER GMBH & CO KG, D-86154 Augsburg (DE)
(72) Erfinder: Schmitt, Lothar, D-8900 Augsburg (DE)
(74) Vertreter: Grättinger, Günter

(56) Entgegenhaltungen:
- EP-A- 0 208 128
- US-A- 2 938 569
- US-A- 3 850 453
- US-A- 4 250 708

## Beschreibung

Die Erfindung betrifft ein doppelwandiges Rohr mit einem Innenrohr und einem Außenrohr, wobei das Innenrohr und das Außenrohr einseitig zueinander fixiert sind und einen ringförmigen Hohlraum begrenzen, der entfernt von der Fixierung der beiden Rohre zueinander durch eine Ringdichtung abgedichtet ist.

Derartige Rohre finden beispielsweise dort Verwendung, wo nur ein geringer Wärmeaustausch des das Rohr durchströmenden Mediums mit der Umgebung erwünscht ist. In diesem Falle wirkt der zwischen dem Innenrohr und dem Außenrohr angeordnete ringförmige Hohlraum als Isolierung. Ein Anwendungsfall ist beispielsweise die Abgasleitung eines mit einem Abgaskatalysator ausgerüsteten Verbrennungsmotors, wo es zum Erzielen eines höheren Katalysatorwirkungsgrads erwünscht ist, das den Verbrennungsmotor verlassende Abgas dem Katalysator mit hoher Temperatur zuzuführen.

Aus der US-A-3 850 453 ist ein doppelwandiges Abgasrohr bekannt, welches aus zwei Abschnitten aufgebaut ist. Im Bereich der Verbindung der beiden Abschnitte sind die beiden Außenrohrabschnitte gegeneinander fixiert, während die beiden Innenrohrabschnitte zum Ausgleich von Wärmedehnungen ineinander gleiten können. Bei jedem Abschnitt kann ein den Hohlraum abdichtender Ring vorgesehen sein, welcher auch dazu dient, während der Montage des Rohres den jeweiligen Innenrohrabschnitt bezüglich des jeweiligen Außenrohrabschnittes zu führen.

Bei Verwendung derartiger doppelwandiger Rohre als wärmeisolierte Abgasleitung besitzen das Innenrohr und das Außenrohr im Betriebszustand stark unterschiedliche Temperaturen; dies führt zu einer stärkeren Ausdehnung des heißen Innenrohrs gegenüber dem Außenrohrs, welches der Umgebungstemperatur ausgesetzt ist. Aus diesem Grund ist die Abdichtung des ringförmigen Hohlraumes zweckmäßigerweise so ausgestaltet, daß sie ohne Verlust an Dichtwirkung einen Längenausgleich gestattet, d.h. daß sich das heißere Innenrohr ungehindert gegenüber dem wenigen heißen Außenrohr ausdehnen kann.

Insbesondere können bei langen Rohren, bei welchen die Längenverschiebung des Innenrohres bezüglich des Außenrohres entsprechend groß ist, im Bereich der Abdichtung Probleme auftreten. Bekannte Ringdichtungen können dabei verkanten und führen dadurch zu einem Verklemmen der Rohre zueinander, wodurch die Ausdehnung des Innenrohres behindert und letzteres verbogen wird. Um diesen Problemen abzuhelfen, mußte bei bekannten doppelwandigen Rohren, bei denen im Bereich der Dichtung sowohl das Innenrohr wie auch das Außenrohr zylindrisch ausgebildet sind, die Ringdichtungen genau an die jeweiligen Verhältnisse angepaßt werden, d.h. es mußten Ringdichtungen mit Über- und Untermaß bereitgehalten werden, um Wandstärke- und Durchmessertoleranzen der Rohre auszugleichen. Dies führte zu einem beträchtlichen Mehraufwand bei der Fertigung. Trotzdem waren die Abdichtung des ringförmigen Hohlraumes und die Halterung des Innenrohres im Außenrohr bei bekannten doppelwandigen Rohren vielfach unbefriedigend.

Der vorliegenden Neuerung liegt die Aufgabe zugrunde, ein doppelwandiges Rohr der eingangs genannten Art zu schaffen, bei welchem die Gefahr des Verklemmens des Innenrohres und des Außenrohres zueinander im Bereich der Ringdichtung nicht besteht. Gleichzeitig soll diese den ringförmigen Hohlraum zwischen dem Außenrohr und dem Innenrohr wirkungsvoll abdichten und das Innenrohr zuverlässig im Außenrohr haltern.

Diese Aufgabe wird gemäß dem Kennzeichen von Anspruch 1 gelöst.

Bei dem neuerungsgemäßen doppelwandigen Rohr ist der radiale Abstand zwischen dem Innenrohr und dem Außenrohr im Bereich des Lagerrings somit nicht konstant, sondern er verändert sich vielmehr in axialer Richtung der Rohre. Es hat sich herausgestellt, daß durch diese Maßnahme ein Verklemmen des Lagerringes in dem ringförmigen Hohlraum weitgehend verhindert wird. Indem sich das konisch ausgebildete Rohr - Außenrohr oder Innenrohr - in der Richtung weg von der Fixierung der beiden Rohre zueinander erweitert, wird eine Ausdehnung des Innenrohres in radialer und axialer Richtung ermöglicht, ohne daß dadurch ein Verklemmen der Dichtung verursacht wird. Bei einer entsprechenden Gestaltung des konischen Rohrabschnittes, d.h. bei Berücksichtigung von Durchmesser- und Längenausdehnung des Innenrohres im Verhältnis zum Außenrohr gleitet der an dem zylindrischen Rohrabschnitt fixierte Lagerring unter Aufrechterhaltung eines gleichmäßigen Auflagedrucks entlang dem konischen Rohrabschnitt. Dieser Effekt ist von besonderer Bedeutung bei relativ kurzen Rohren und großen Rohrdurchmessern.

Aber auch bei relativ langen Rohren mit kleinen Rohrdurchmessern ist der neuerungsgemäße Vorschlag vorteilhaft, wenn der Konuswinkel entsprechend klein gewählt wird, so daß die Durchmesseraufweitung des Innenrohres mit dessen zunehmender Längenausdehnung etwa kompensiert wird.

Besonders bevorzugt ist das neuerungsgemäße doppelwandige Rohr in der Weise gestaltet, daß im Bereich des Lagerringes das Innenrohr zylindrisch und das Außenrohr sich konisch erweiternd ausgebildet ist. Eine derartige Ausgestaltung besitzt den Vorteil, daß der Lagerring auch dann noch plaziert werden kann, wenn das Innenrohr und das Außenrohr bereits zueinander fixiert sind. Der Lagerring kann nämlich in diesem Falle von dem offenen, d.h. dem der Fixierung gegenüberliegende Ende des Rohres in den ringförmigen Hohlraum eingelegt werden, bis er an dem sich in Montagerichtung konisch verjüngenden Außenrohr anliegt. Dabei paßt sich der bevorzugt aus verdichtetem Drahtgestrick hergestellte Lagerring in seiner Kontur der Gestaltung des ringförmigen Hohlraumes im Dichtungsbereich an.

Da der neuerungsgemäße Lagerring wie ein Loslager wirkt, ist es zweckmäßig, daß auf beiden Seiten des Lagerrings den Hohlraum verengende Sicken des Außenrohrs oder Aufweitungen des Innenrohrs als Anschläge zur Begrenzung der axialen Bewegung des Lagerringes vorgesehen sind.

Eine besonders einfache Herstellung und Montage des doppelwandigen Rohrs werden durch dessen Ausgestaltung nach den Schutzansprüchen 4 und 5 erzielt.

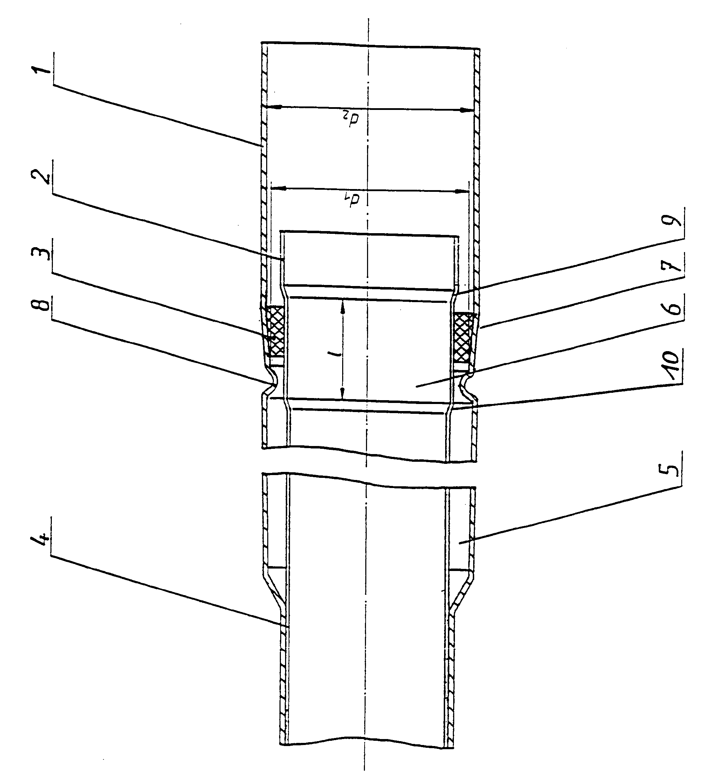

Im folgenden wird ein Ausführungsbeispiel des neuerungsgemäßen doppelwandigen Rohrs anhand der Zeichnung näher erläutert.

Das Rohr besteht aus einem Außenrohr 1, einem Innenrohr 2 und einem Lagerring 3. Das Außenrohr 1 und das Innenrohr 2 sind mittels einer Fixierung 4 einseitig zueinander fixiert. Zwischen der Fixierung 4 und dem Lagerring 3 befindet sich zwischen dem Innenrohr 2 und dem Außenrohr 1 ein ringförmiger Hohlraum 5.

Im Bereich des Lagerringes 3 besitzt das Innenrohr 2 einen zylindrischen Rohrabschnitt 6, der als Gleitfläche für den Lagerring 3 zum Längenausgleich der Wärmedehnung des Innenrohres 2 dient. Demgegenüber besitzt das Außenrohr 1 in diesem Bereich einen konischen Rohrabschnitt 7, wobei die konische Erweiterung in der Richtung weg von der Fixierung 4 vorgesehen ist. Das in der Zeichnung dargestellte Verhältnis der Durchmesser d₂ zu d₁ ist aus Gründen der Darstellung überzeichnet; in der Praxis eingesetzte Rohre gemäß der Erfindung verfügen über eine wesentlich geringere Konizität des konischen Rohrabschnittes 7.

Eine in Umfangsrichtung verlaufende, nach innen vorsprigende Sicke 8 grenzt an den konischen Rohrabschnitt 7 an dem Ende mit dem kleineren Durchmesser an. Der zylindrische Rohrabschnitt 6 des Innenrohres 2 wird einerseits durch einen Absatz 10 begrenzt. Die axiale Erstreckung 1 des zylindrischen Rohrabschnittes 6 ist dabei auf den maximal erforderlichen Längenausgleich zwischen dem Außenrohr 1 und dem Innenrohr 2 abgestimmt.

## Patentansprüche

1. Doppelwandiges Rohr mit einem Innenrohr (2) und einem Außenrohr (1), wobei das Innenrohr und das Außenrohr einseitig zueinander fixiert sind und einen ringförmigen Hohlraum (5) begrenzen, der entfernt von der Fixierung der beiden Rohre zueinander durch eine Ringdichtung abgedichtet ist,
dadurch gekennzeichnet,
daß die Ringdichtung durch einen verschieblichen Lagerring (3) gebildet ist und
daß im Bereich der axialen Bewegung des Lagerringes (3) nur eines der Rohre zylindrisch (6) und das andere in Richtung weg von der Fixierung (4) konisch erweiternt (7) ausgebildet ist.

2. Rohr nach Anspruch 1,
dadurch gekennzeichnet,
daß auf beiden Seiten des Lagerringes (3) den Hohlraum verengende Sicken (8) des Außenrohres (1) oder Aufweitungen (9) des Innenrohres (2) als Anschläge zur Begrenzung der axialen Bewegung des Lagerringes (3) vorgesehen sind.

3. Rohr nach Anspruch 1,
dadurch gekennzeichnet,
daß im Bereich des Lagerringes (3) das Innenrohr (2) zylindrisch und das Außenrohr (1) sich konisch erweiternd ausgebildet ist.

4. Rohr nach Anspruch 2,
dadurch gekennzeichnet,
daß das Außenrohr (1) eine in Umfangsrichtung verlaufende, nach innen vorspringende Sicke (8) auf der der Fixierung (4) näheren Seite des Lagerringes (3) besitzt.

5. Rohr nach Anspruch 2,
dadurch gekennzeichnet,
daß das Innenrohr (2) eine Aufweitung (9) auf der von der Fixierung (4) abgewandten Seite des Lagerringes (3) besitzt.

6. Rohr nach Anspruch 1,
dadurch gekennzeichnet,
daß der Dichtring (3) aus verdichtetem Drahtgestrick besteht.

## Claims

1. Double-walled pipe with an inner pipe (2) and an outer pipe (1), the inner pipe and the outer pipe being fixed one to the other on one side and defining an annular cavity (5), which is sealed by a ring gasket remote from the point where the two pipes are fixed one to the other, characterised in that the ring gasket is formed by a displaceable bearing ring (3) and that in the region of the axial movement of the bearing ring (3), only one of the pipes is constructed cylindrically (6) and the other is constructed to widen out conically in the direction away from the fixing point (4).

2. Pipe according to Claim 1, characterised in that provided on both sides of the bearing ring (3) are corrugations (8) of the outer pipe (1) narrowing down the cavity or enlargements (9) of the inner pipe (2) as stops for restricting the axial movement of the bearing ring (3).

3. Pipe according to Claim 1, characterised in that in the region of the bearing ring (3), the inner pipe (2) is constructed cylindrically and the outer pipe (1) is constructed to widen out conically.

4. Pipe according to Claim 2, characterised in that the outer pipe (1) comprises a corrugation (8) projecting inwards and extending in the peripheral direction, on the side of the bearing ring (3) closer to the fixing point (4).

5. Pipe according to Claim 2, characterised in that the inner pipe (2) has an enlargement (9) on the side of the bearing ring (3) remote from the fixing point (4).

6. Pipe according to Claim 1, characterised in that the sealing ring (3) consists of compressed knitted wire.

## Revendications

1. Tuyau à paroi double comportant un tube intérieur (2) et un tube extérieur (1), et dans lequel le tube intérieur et le tube extérieur sont fixés unilatéralement l'un à l'autre et délimitent une cavité annulaire (5), qui est fermée de façon étanche par une garniture d'étanchéité annulaire, en un point éloigné de la fixation réciproque des deux tubes, caractérisé en ce que la garniture d'étanchéité annulaire est formée par une bague de support mobile (3) et que dans la zone du déplacement axial de la bague de support (3), seul l'un des tubes possède une forme cylindrique (6), tandis que l'autre est élargi avec une forme conique (7) dans une direction s'écartant de la fixation (4).

2. Tuyau selon la revendication 1, caractérisé en ce que des deux côtés de la bague de support (3) il est prévu des moulures (8), qui rétrécissent la cavité du tube extérieur (1) ou des élargissements (9) du tube intérieur (2) en tant que butées servant à limiter le déplacement axial de la bague de support (3).

3. Tuyau selon la revendication 1, caractérisé en ce qu'au voisinage de la bague de support (3), le tube intérieur (2) possède une forme cylindrique et le tube extérieur (1) s'élargit avec une forme conique.

4. Tuyau selon la revendication 2, caractérisé en ce que le tube extérieur (1) possède une moulure (8), qui fait saillie intérieurement et s'étend dans la direction circonférentielle, sur le côté de la bague de support (3), qui est le plus proche de la fixation (4).

5. Tuyau selon la revendication 2, caractérisé en ce que le tube intérieur (2) possède une partie élargie (9) sur le côté de la bague de support (3), qui est tourné à l'opposé de la fixation (4).

6. Tuyau selon la revendication 1, caractérisé en ce que la bague d'étanchéité (3) est réalisée en un treillis de fil dense.
